# EUROPÄISCHE PATENTSCHRIFT

(11) **EP 3 765 883 B1**
(45) Veröffentlichungstag und Bekanntmachung des Hinweises auf die Patenterteilung: **07.08.2024**
(21) Anmeldenummer: 20723272.9
(22) Anmeldetag: 06.04.2020
(51) Int. Cl.: G02B 7/00, G02B 7/02

(54) **JUSTIERFASSUNG ZUR RADIALEN JUSTIERUNG EINER OPTISCHEN EINHEIT MIT EINER OPTISCHEN ACHSE**
ADJUSTMENT MOUNT FOR RADIAL ADJUSTMENT OF AN OPTICAL UNIT HAVING AN OPTICAL AXIS
MONTURE D'AJUSTAGE CONÇUE POUR RÉALISER L'AJUSTAGE RADIAL D'UNE UNITÉ OPTIQUE PRÉSENTANT UN AXE OPTIQUE

(30) Priorität: 12.04.2019 DE 102019002763; 25.09.2019 DE 102019125741; 24.02.2020 DE 102020104784
(43) Veröffentlichungstag der Anmeldung: 20.01.2021
(73) Patentinhaber: JENOPTIK Optical Systems GmbH, 07745 Jena (DE)
(72) Erfinder: FRANZ, Stefan, 07751 Jena (DE); SEHER, Bernd, 07743 Jena (DE)
(74) Vertreter: Gleim Petri Patent- und Rechtsanwaltspartnerschaft mbB
(86) Internationale Anmeldenummer: PCT/DE2020/100281
(87) Internationale Veröffentlichungsnummer: WO 2020/207536

(56) Entgegenhaltungen:
- WO-A1-2011/150042
- WO-A1-93/06514
- IT-A1- 201700 101 031

## Beschreibung

Es gibt eine Vielzahl von Justierfassungen, bestehend aus einem Träger und einer Hilfsfassung, in denen ein zu justierendes optisches Bauelement radial justiert und anschließend fixiert werden kann. Diese Justierfassungen haben gemeinsam, dass die Hilfsfassung, die mit dem optischen Bauelement starr verbunden ist, über wenigstens zwei im Träger geführte oder gelagerte und mit der Hilfsfassung mittelbar oder unmittelbar in Verbindung stehende Verstelleinrichtungen relativ zu dem Träger bewegbar ist, womit die Lage der optischen Achse des Bauelements justiert wird.

Aufgrund unterschiedlicher Rahmenbedingungen und Genauigkeitsanforderungen gibt es eine Vielzahl von Ausführungen der Verstelleinrichtungen für aus dem Stand der Technik bekannte Justierfassungen. Um eine zwangsfreie Justierung in wenigstens zwei einen Winkel (meist 90°) miteinander einschließende Wirkungsrichtungen zu gewährleisten, weisen die bekannten Justierfassungen häufig zu den Verstelleinrichtungen zusätzlich unterschiedlich konstruierte Halte- und / oder Rückstelleinrichtungen auf, die im Zusammenwirken das Justieren und Fixieren erlauben.

Zum Fixieren einer eingestellten Justierlage der Hilfsfassung und damit des optischen Bauelementes relativ zu dem Träger werden die Verstelleinrichtungen üblicherweise mechanisch, z. B. durch Kontermuttern oder Madenschrauben, oder durch einen Lack fixiert. Das Fixieren der Justierlage z. B. über Kontermuttern hat jedoch zum einen den Nachteil, dass dabei in einer radialen Richtung Kräfte bzw. um eine radiale Richtung Momente wirken, die zur Dejustage führen können. Zum anderen kann eine Lockerung der Fixierung, die aufgrund von mechanischer Belastung oder Langzeiteinflüssen auftreten kann, unmittelbar zu einem radialen Spiel und damit ebenfalls zu einer Dejustage führen.

Aus der Offenlegungsschrift IT 201700101031 A1 ist eine Vorrichtung zur Positionierung einer optischen Einheit bekannt. Die optische Einheit ist in einer Hilfsfassung befestigt, die an einem Träger justierbar aufgenommen ist. Die Hilfsfassung und der Träger sind flächige Bauteile, die mit einer ihrer Grundflächen aneinander liegend miteinander verbunden sind. Die Anlage erfolgt kraftschlüssig, unter einer von Federn erzeugten Spannkraft, wodurch die Hilfsfassung in der Ebene der Anlagefläche und senkrecht zur optischen Achse der optischen Einheit justierbar bleibt. Das Justieren erfolgt mittels Stellschrauben, die zur Vermeidung von Spiel entgegen einer Federkraft wirken. Eine Fixierung der Hilfsfassung in der justierten Position zur Erreichung einer Langzeitstabilität der Justierung ist hier nicht vorgesehen.

Die Offenlegungsschrift WO 3906514 A1 offenbart eine justierbare Halterung für ein optisches Element. Das optische Element ist an seinen Rändern formschlüssig in einer Hilfsfassung aufgenommen. Die Hilfsfassung ist justierbar an einem Träger befestigt. In einer Ebene senkrecht zur optischen Achse liegt dazu die Hilfsfassung mit einer Fläche an einer Fläche des Trägers an. Parallel zu dieser Ebene wirken Stellschrauben auf die Hilfsfassung und auf das optische Element, mit denen das optische Element gegenüber dem Träger justierbar ist. Nach der Justierung wird die Hilfsfassung mittels parallel zur optischen Achse wirkenden Schrauben am Träger fixiert.

In der Offenlegungsschrift WO 2011150042 A1 ist ein Optikhalter mit justierbarer x-y-Richtung und z-Rotation offenbart. Der Optikhalter besteht aus einem Außenteil als Träger, das über flexible Gelenke mit einem Innenteil als Optikfassung in Verbindung steht. Das Innenteil ist gegenüber dem Außenteil in einer Ebene senkrecht zur optischen Achse justierbar. Für die Justierung in x- und y-Richtung ist in jeder der Richtungen ein Paar aus einem Federhalterbolzen und einer Stellschraube angeordnet. Die Federhalterbolzen sind mit dem Innenteil verschraubt und stützen sich mit einer Feder im Außenteil ab. Die Stellschrauben sind im Außenteil verschraubt und wirken entgegen der jeweiligen Federkraft auf das Innenteil. Eine Fixierung der Hilfsfassung in der justierten Position zur Erreichung einer Langzeitstabilität der Justierung ist hier nicht vorgesehen. Die Aufgabe der Erfindung besteht darin, eine Justierfassung zu finden, in der eine optische Einheit allein oder in Zusammenwirkung mit einer zweiten Justierfassung radial justierbar ist, die einfach herstellbar, montierbar und bedienbar ist und die eine Langzeitstabilität der einjustierten Radiallage der gefassten optischen Einheit gewährleistet.

Diese Aufgabe wird für eine Justierfassung zur radialen Justierung einer optischen Einheit mit einer optischen Achse, enthaltend einen Träger, eine Hilfsfassung zur Aufnahme einer optischen Linse oder eines Objektivs, und wenigstens zwei den Träger mit der Hilfsfassung verbindende Verstelleinrichtungen mit jeweils einer Stellschraube, eine Schraubenachse, einen Schraubenkopf und einen Schraubenschaft aufweisend, über deren Betätigung die Hilfsfassung gegenüber dem Träger in einer durch die Schraubenachsen aufgespannten Justierebene verschiebbar ist, dadurch gelöst, dass die Verstelleinrichtungen jeweils ein erstes Zylinderelement mit einer ersten Zylinderachse und ein zweites Zylinderelement mit einer zweiten Zylinderachse umfassen, wobei das erste Zylinderelement im Träger und das zweite Zylinderelement in der Hilfsfassung gelagert ist, der Schraubenkopf im ersten Zylinderelement um die erste Zylinderachse drehbar angeordnet ist und der Schraubenschaft in der Hilfsfassung schraubbar geführt ist, wobei die erste Zylinderachse und die zweite Zylinderachse senkrecht zu der Schraubenachse ausgerichtet sind, dass der Träger zwei zueinander und zu den Schraubenachsen parallele erste Stirnflächen und die Hilfsfassung zwei zueinander und zu den ersten Stirnflächen parallele zweite Stirnflächen aufweist und dass zwei Abdeckelemente vorhanden sind, die jeweils an einer der zwei ersten Stirnflächen anliegend mit dem Träger fest verbunden sind und während der Justage nicht oder nur lose miteinander verbunden und nach der Justage miteinander verspannt sind, sodass sie die Hilfsfassung zwischen sich klemmen.

Es ist von Vorteil, wenn der Träger als ein Rahmen ausgebildet ist.

Alternativ kann der Träger vorteilhaft als eine Platte ausgeführt sein.

Vorzugsweise ist die Hilfsfassung durch einen Spannring mit einer Ringachse senkrecht zu den zweiten Stirnflächen der Hilfsfassung und zwei freie Enden aufweisend gebildet und es ist eine Schraubverbindung vorhanden, über die die zwei freien Enden zusammenziehbar sind.

Es ist von Vorteil, wenn an einer inneren Umfangsfläche des Spannrings eine Ringschneide mit einer gerundeten Kante ausgebildet ist.

Vorteilhaft weisen die beiden zweiten Stirnflächen zueinander einen geringeren Abstand auf als die beiden ersten Stirnflächen.

Vorzugsweise ist die Hilfsfassung durch zwei koaxial hintereinander angeordnete Ringscheiben und einen elastischen Ring gebildet. Dabei weisen die Ringscheiben einander zugewandte weitere zweite Stirnflächen auf, an denen einander zugewandte Fasen ausgebildet sind, die gemeinsam eine ringförmige geteilte V-Nut bilden, und der elastische Ring liegt in der V-Nut. Es sind wenigstens zwei erste Verschraubungen vorhanden, mittels derer die Ringscheiben, einer Rückstellkraft des elastischen Ringes entgegenwirkend, zueinander fixiert sind.

Es ist von Vorteil, wenn die während der Justage nicht oder nur lose und nach der Justage fest miteinander verbundenen Abdeckbleche über wenigstens zwei zweite Verschraubungen miteinander verbunden sind.

Mit zwei erfindungsgemäßen Justierfassungen, parallel zueinander ausgerichtet und in einem festen Abstand zueinander angeordnet, ist eine Justiervorrichtung gebildet, um eine längere optische Einheit an ihren Enden zu fassen. Dabei ist eine der zwei Justierfassungen nach einem der Ansprüche 1 bis 8 ausgeführt und die andere der zwei Justierfassungen nach Anspruch 5 oder 7 ausgeführt. Die Träger der zwei Justierfassungen können auch verschiedene Bestandteile eines gemeinsamen Gestells sein.

Es können auch mindestens zwei Justierfassungen, in denen jeweils eine einzelne optische Einheit gefasst ist und die parallel zueinander ausgerichtet und in einem festen Abstand zueinander angeordnet sind, eine Justiervorrichtung bilden, wobei die Träger der mindestens zwei Justierfassungen Bestandteile eines gemeinsamen Gestells sind.

In diesem Gestell, das hier auch im Sinne eines Tubus Verwendung findet, können zusätzlich auch weitere optische Einheiten fest angeordnet sein. Mindestens eine der mindestens zwei Justierfassungen ist hier nach einem der Ansprüche 1 bis 8 ausgeführt. Vorteilhaft ist dann das Abdeckelement wenigstens einer der Justierfassungen durch einen an dem gemeinsamen Gestell ausgebildeten Bund gebildet.

Nachfolgend soll die erfindungsgemäße Justierfassung anhand von Ausführungsbeispielen in Verbindung mit Zeichnungen näher erläutert werden. Dazu zeigen:
- Fig. 1a-1c: ein erstes Ausführungsbeispiel einer Justierfassung mit einem Träger in Form eines Rahmens und einer Hilfsfassung, gebildet durch einen Spannring,
- Fig. 2a-2d: ein zweites Ausführungsbeispiel einer Justierfassung mit einem Träger in Form einer Platte und einer Hilfsfassung, gebildet durch einen elastischen Ring,
- Fig. 3: eine erste Ausführung einer Justiervorrichtung mit zwei Justierfassungen als Prinzipskizze,
- Fig. 4: eine zweite Ausführung einer Justiervorrichtung mit zwei Justierfassungen als Prinzipskizze und
- Fig. 5a-5c: eine dritte Ausführung einer Justiervorrichtung mit zwei Justierfassungen, deren Träger durch verschiedene Bestandteile eines gemeinsamen Gestells gebildet sind, als Prinzipskizze.

Die Justierfassung 0 ermöglicht eine radiale Justierung einer in ihr gefassten optischen Einheit, wie einer optischen Linse oder auch einer optischen Baugruppe, z. B. einer Kittgruppe, die in ihrer Baulänge die Gesamtdicke d der Justierfassung 0 höchstens unwesentlich überschreitet. Für optische Einheiten, wie Objektive OB, mit einer wesentlich größeren Baulänge, als die Gesamtdicke d der Justierfassung 0 ist, wird die Justierfassung 0 zweifach in einer Vorrichtung verwendet, in der die optische Einheit an ihren Enden gefasst wird. Es können auch mehrere Justierfassungen 0, jeweils eine optische Einheit fassend, in einer Vorrichtung verwendet werden. Dabei können die Träger 1 der Justierfassungen 0 einzelne Bauteile sein, die in einer festen Anordnung zueinander angeordnet sind, oder aber Bestandteile eines gemeinsamen Gestells 8 sein.

Alle Ausführungen der Justierfassung 0 enthalten einen Träger 1, eine Hilfsfassung 2, geeignet zur Aufnahme z. B. einer optischen Linse L oder eines Endes eines Objektivs OB, und wenigstens zwei den Träger 1 mit der Hilfsfassung 2 verbindende Verstelleinrichtungen 3. Die Verstelleinrichtungen 3 weisen jeweils eine Stellschraube 3.1 auf, mit einer Schraubenachse 3.1.0, einem Schraubenkopf 3.1.1 und einem Schraubenschaft 3.1.2. Über die Betätigung der Verstelleinrichtungen 3 ist die Hilfsfassung 2 gegenüber dem Träger 1 in einer durch die Schraubenachsen 3.1.0 aufgespannten Justierebene verschiebbar. Soweit unterscheiden sich aus dem Stand der Technik bekannte Justierfassungen nicht von einer erfindungsgemäßen Justierfassung 0.

Erfindungswesentlich ist die konstruktive Prinziplösung für die Verstelleinrichtungen 3 und die Fixierung einer eingestellten Justierlage, die nicht über eine unmittelbare Fixierung der Verstelleinrichtungen 3 erfolgt.

Die Verstelleinrichtungen 3 umfassen jeweils ein erstes Zylinderelement 3.2 mit einer ersten Zylinderachse 3.2.0 und ein zweites Zylinderelement 3.3 mit einer zweiten Zylinderachse 3.3.0, wobei das erste Zylinderelement 3.2 im Träger 1 und das zweite Zylinderelement 3.3 in der Hilfsfassung 2 gelagert ist. Der Schraubenkopf 3.1.1 ist im ersten Zylinderelement 3.2 drehbar angeordnet und der Schraubenschaft 3.1.2 ist im zweiten Zylinderelement 3.3 schraubbar geführt. Die erste Zylinderachse 3.2.0 und die zweite Zylinderachse 3.3.0 sind senkrecht zu der Schraubenachse 3.1.0 ausgerichtet.

Mit dem Betätigen einer der Verstelleinrichtungen 3, das heißt die Stellschraube 3.1 wird in das zweite Zylinderelement 3.3 ein- bzw. aus diesem ausgeschraubt, wird die Hilfsfassung 2 entlang der Schraubenachse 3.1.0 relativ zum Träger 1 verschoben. Gleichzeitig kann die Stellschraube 3.1 der wenigstens einen anderen Verstelleinrichtung 3 dadurch, dass das erste und zweite Zylinderelement 3.2, 3.3 jeweils um ihre Zylinderachse 3.2.0, 3.3.0 drehbar gelagert sind, eine Ausgleichbewegung ausführen. Die Hilfsfassung 2 kann so zwangsfrei in einer Justierebene, aufgespannt durch die Schraubenachsen 3.1.0, justiert werden.

Um die Hilfsfassung 2 in der einjustierten Relativlage zum Träger 1 fixieren zu können, weist der Träger 1 zwei zueinander und zu den Schraubenachsen 3.1.0 parallele erste Stirnflächen 1.1 und die Hilfsfassung 2 zwei zueinander und zu den ersten Stirnflächen 1.1 parallele zweite Stirnflächen 2.1 auf. Es sind zwei Abdeckelemente 4 vorhanden, die jeweils an einer der zwei ersten Stirnflächen 1.1 anliegend mit dem Träger 1 fest verbunden sind. Wenigstens eines der zwei Abdeckelemente 4 ist vorteilhaft als ein biegsames Abdeckblech ausgeführt. Während der Justage sind die Abdeckelemente 4 in einem spannungsfreien Zustand und nicht oder nur lose miteinander verbunden, sodass sie die Bewegung der Hilfsfassung 2 während der Justage nicht beeinträchtigen. Vorteilhaft weisen die beiden zweiten Stirnflächen 2.1 zueinander einen geringeren Abstand als die beiden ersten Stirnflächen 1.1 auf. Erst nach der Justage werden die Abdeckelemente 4, mittelbar über die Hilfsfassung 2, miteinander verspannt, so dass die Hilfsfassung 2 zwischen den Abdeckelementen 4 geklemmt wird. Die dabei erzeugte Andruckkraft wirkt in einer zur Justierebene senkrechten Richtung, wodurch eine Dejustage innerhalb der Justierebene ausgeschlossen wird. Vorteilhaft sind die während der Justage nicht oder nur lose miteinander verbundenen Abdeckelemente 4, die nach der Justage miteinander verspannt werden, über zweite Verschraubungen 6.2 miteinander verbunden. Dabei wirken beim Ein- oder Ausschrauben der Stellschrauben 3 keine Kräfte oder Moment direkt auf die Hilfsfassung 2, sondern auf die bereits am Träger 1 befestigten Abdeckelemente 4.

Verschiedene vorteilhafte Ausführungen der Justierfassung 0 unterscheiden sich in der Ausführung des Trägers 1.

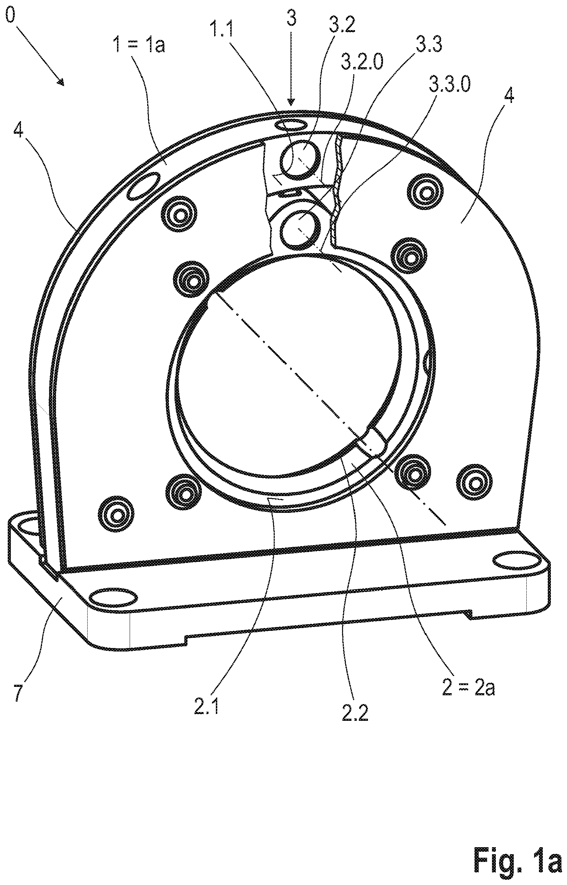

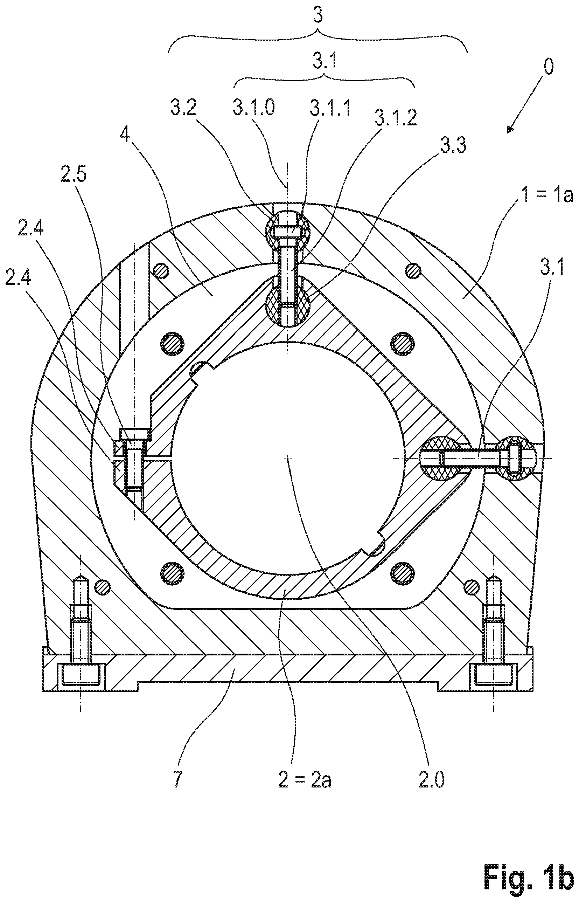

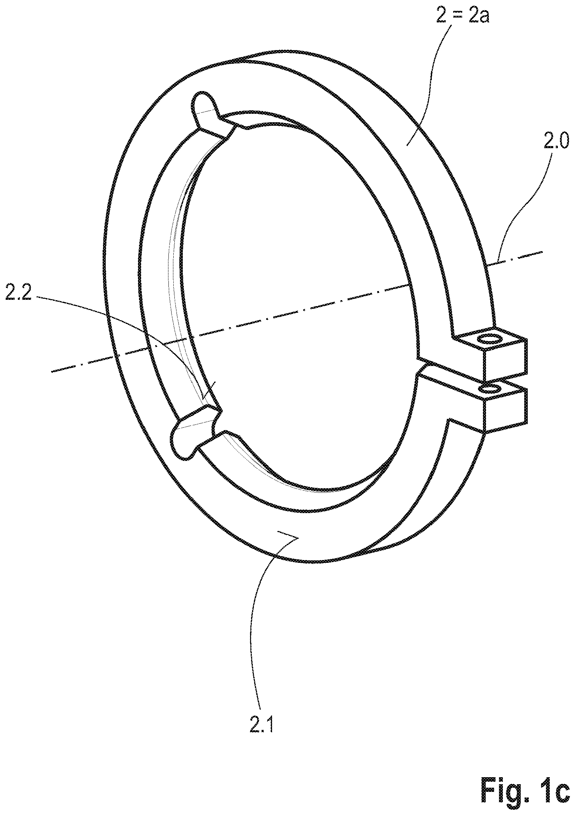

In den Fig. 1a bis 1c ist eine Ausführung gezeigt, bei der der Träger 1 als ein Rahmen 1a ausgebildet ist. Es sind genau zwei Verstelleinrichtungen 3 vorhanden, deren Schraubenachsen 3.1.0 parallel zu den ersten Stirnflächen 1.1 verlaufen, einen rechten Winkel miteinander einschließen und sich an einem gedachten Schnittpunkt innerhalb des Rahmens 1a schneiden. Der Rahmen 1a ist so gestaltet, dass die optische Achse einer darin gefassten optischen Einheit wenigstens annähernd durch den Schnittpunkt verläuft. Durch Betätigung der Verstelleinrichtungen 3 werden orthogonal auf den Schnittpunkt gerichtete Stellbewegungen in die Hilfsfassung 2 eingeleitet. Die Justierbewegung lässt sich so durch eine zusammengesetzte Bewegung in zwei Raumrichtungen eines kartesischen Koordinatensystems erklären, dessen Koordinatenursprung in dem Schnittpunkt liegt.

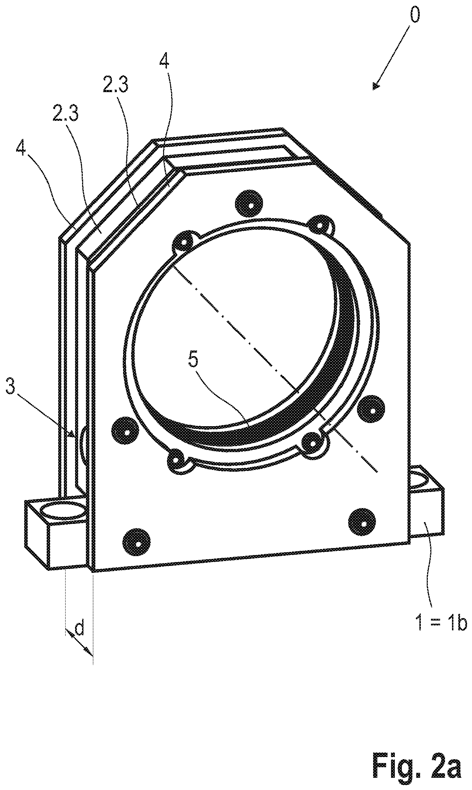

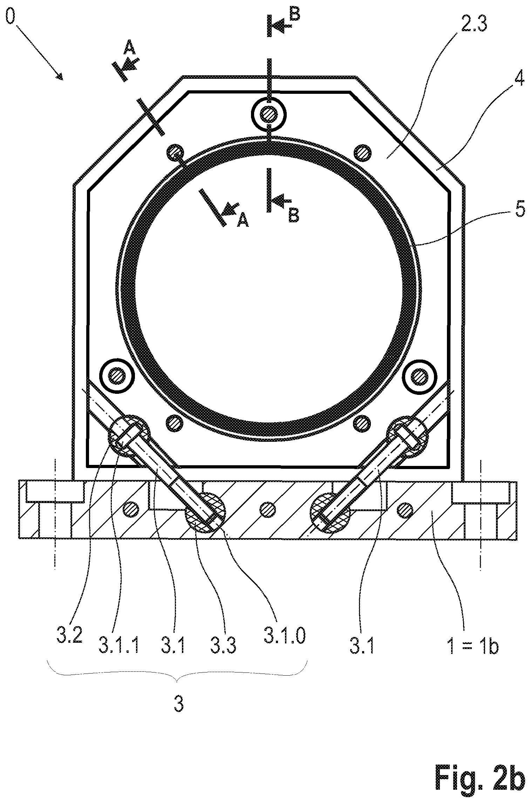

Die Ausführung des Trägers 1 als Rahmen 1a hat einen vergleichsweise hohen Raumbedarf. Dieser ist geringer, wenn der Träger 1 als eine Platte 1b ausgeführt ist, wie in den **Fig. 2a bis 2d** gezeigt ist. Durch Betätigung der Verstelleinrichtungen 3 werden hier Stellbewegungen in tangentialer Richtung zu einem gedachten Kreis um die optische Achse einer in der Hilfsfassung 2 gefassten optischen Einheit eingeleitet.

Alternativ (nicht in den Fig. gezeigt) können die Schraubenachsen 3.1.0 der zwei Verstelleinrichtungen 3 orthogonal zur optischen Achse einer in der Hilfsfassung 2 gefassten optischen Einheit gerichtet sein, wenn man die Stellschrauben 3.1 z. B. "von unten" durch den Fuß 7 betätigt oder Stellschrauben 3.1 mit seitlicher Betätigung einsetzt (6-Kant-Kopf, Schraubenkopf 3.1.1 mit radialen Betätigungslöchern o.ä.).

In Abhängigkeit von der Länge der zu justierenden optischen Einheit kann diese in nur einer Justierfassung 0 oder in zwei Justierfassungen 0 gefasst sein. Ist die Justierfassung 0 dazu vorgesehen, dass allein in ihr die eine optische Einheit, wie z. B. eine optische Linse, gefasst wird, wird diese in der Hilfsfassung 2 fest sitzend eingepasst. Das ist nicht möglich, wenn die Justierfassung 0 gemeinsam mit einer zweiten Justierfassung 0 in einer Vorrichtung verwendet wird, die eine selbe optische Einheit, wie z. B. ein Objektiv OB, fassen. Für eine zwangsfreie Justage in einer der zwei Justierfassungen 0 muss eine Ausgleichbewegung der gefassten optischen Einheit durch eine Winkelverkippung innerhalb der anderen Justierfassung 0 möglich sein. Das wird möglich, wenn entweder zwischen der optischen Einheit und der Hilfsfassung 2 kein Flächenkontakt sondern idealerweise nur ein Linienkontakt, z. B. über eine Ringschneide 2.2 besteht, womit die optische Einheit um die Achse einer Kreislinie kippbar ist, oder wenn die gefasste optische Einheit in der Hilfsfassung 2 elastisch gehalten wird. Bei der Kippung handelt es sich lediglich um eine Ausgleichbewegung gegenüber einem Zwang, der durch unterschiedliche Justierlagen der beiden Justierfassungen 0 hervorgerufen werden kann.

In einer vorteilhaften Ausführung, gezeigt in den **Fig. 1a bis 1c****,** ist eine Hilfsfassung 2 gezeigt, die geeignet ist, eine optische Einheit so zu fassen, dass die gefasste optische Einheit theoretisch nur über eine Linienberührung mit der Hilfsfassung 2 in Kontakt steht, was eine Ausgleichbewegung in Form einer Kippung ermöglicht.

Die Hilfsfassung 2 ist hier durch einen Spannring 2a gebildet, mit einer Ringachse 2.0, die senkrecht zu den zweiten Stirnflächen 2.1 angeordnet ist. Der Spannring 2a hat zwei sich gegenüberliegende freie Enden 2.4, die über eine vorhandene Schraubverbindung 2.5 zusammenziehbar sind. Die Wirkungsrichtung der Schraubverbindung 2.5 verläuft vorteilhaft tangential zu einem um die Ringachse 2.0 gedachten Kreis. An einer inneren Umfangsfläche des Spannringes 2a ist eine Ringschneide 2.2 mit einer gerundeten Kante ausgebildet, an der eine gefasste optische Einheit zur Anlage kommt, die theoretisch nur zu einer Linienberührung führt.

Die in den **Fig. 2a bis 2d** dargestellte Hilfsfassung 2 ist eine vorteilhafte Ausführung, bei der die gefasste optische Einheit in der Hilfsfassung 2 elastisch gehalten wird.

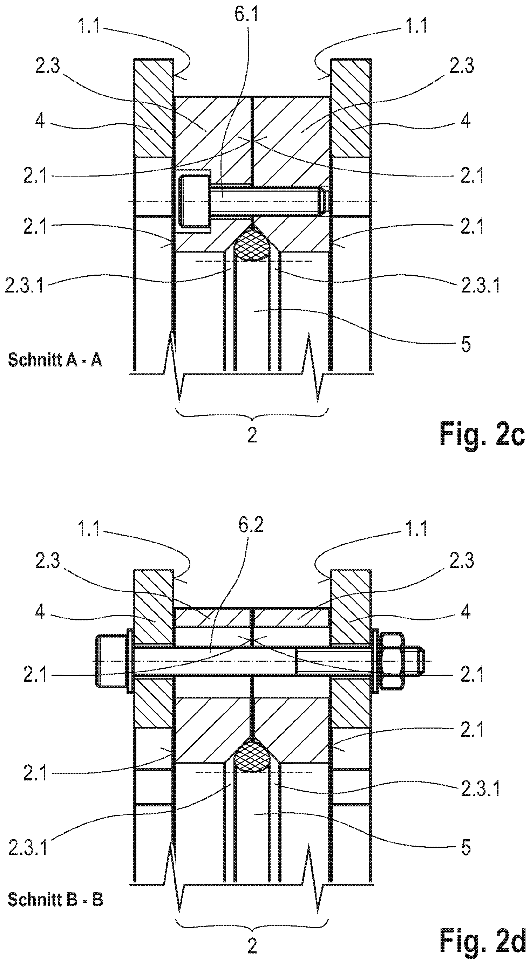

Die Hilfsfassung 2 ist hier zweigeteilt ausgeführt und wird durch zwei koaxial hintereinander angeordnete Ringscheiben 2.3 gebildet, die einander zugewandte weitere zweite Stirnflächen 2.1 aufweisen, an denen einander zugewandte Fasen 2.3.1 ausgebildet sind. Die Fasen bilden gemeinsam eine ringförmige geteilte V-Nut. In dieser V-Nut liegt ein elastischer Ring 5, z. B. ein O-Ring. Es sind wenigstens zwei erste Verschraubungen 6.1 vorhanden, mittels derer die Ringscheiben 2.3, einer Rückstellkraft des elastischen Ringes 5 entgegenwirkend, zueinander fixiert sind, so dass sie gemeinsam mit dem elastischen Ring 5 die Hilfsfassung 2 bilden, wie in **Fig. 2c** als Schnittbild gezeigt. Das in **Fig. 2d** gezeigte Schnittbild zeigt eine von wenigstens zwei zweiten Verschraubungen 6.2, über die die Hilfsfassung 2 nach fertiger Justage mit den Abdeckelementen 4, hier in Form von Abdeckblechen, verschraubt wurde. Die Ringscheiben 2.3 zwischen sich klemmend wirkt eine gleichmäßige Kraft flächig auf den elastischen Ring 5.

Die Justierfassung 0 kann einzeln oder auch mehrfach in einer Vorrichtung verwendet werden. Dabei können in einer Vorrichtung gleiche aber auch verschiedene Ausführungen von Justierfassungen 0 verwendet werden. Für den Fall, dass in der Vorrichtung durch zwei Justierfassungen 0 eine längere Einheit wie ein Objektiv gehalten werden soll, sind die erste und die zweite Justierfassung 0 zwingend parallel zueinander ausgerichtet und in einem an die Länge der zu fassenden optischen Einheit angepassten Abstand a in Richtung der ersten Zylinderachse 3.2.0 so zueinander angeordnet, dass das Objektiv OB, über eine Umfangsfläche an einem Strahleintrittsende durch die erste der zwei Justierfassungen 0 und an einer Umfangsfläche an einem Strahlaustrittsende durch die zweite der zwei Justierfassungen 0 gefasst werden kann.

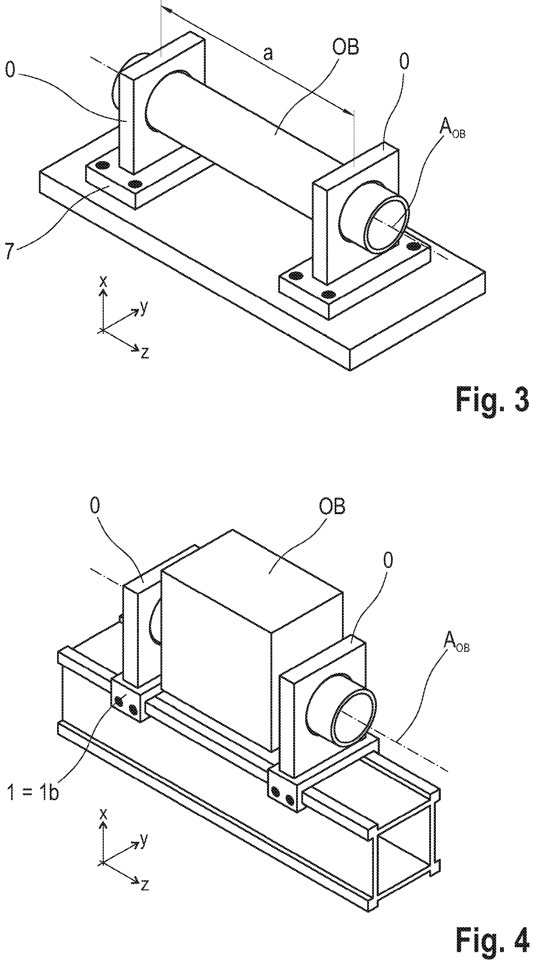

Eine Justiervorrichtung kann, wie in **Fig. 3** stilistisch dargestellt, zwei Justierfassungen 0 enthalten, deren Träger in einem vorgegebenen Abstand zueinander fest auf einer Basisplatte montiert sind. Diese Ausführung der Justiervorrichtung ist für wiederkehrende Justiervorgänge gleicher optischen Einheiten vorteilhaft geeignet. An dem Träger 1, insbesondere in der Ausführung eines Rahmens 1a, ist vorteilhaft ein Fuß 7 montiert, der Löcher zur Befestigung auf der Basisplatte enthält. Insbesondere Rastermaße von bekannten Laborsystemen werden hier unterstützt.

Stattdessen können, wie in **Fig. 4** angedeutet, die Träger der Justierfassungen 0 auch mit einer Schlittenführung, auf einer Justierbank verschiebbar, individuell an verschiedene Baulängen von optischen Einheiten anpassbar sein. Hier wurden beispielhaft Justierfassungen 0 verwendet, bei denen der Träger 1 als eine Platte 1b ausgeführt ist, die gleichzeitig die Funktion eines Fußes bzw. des auf der Justierbank geführten Schlitten übernimmt.

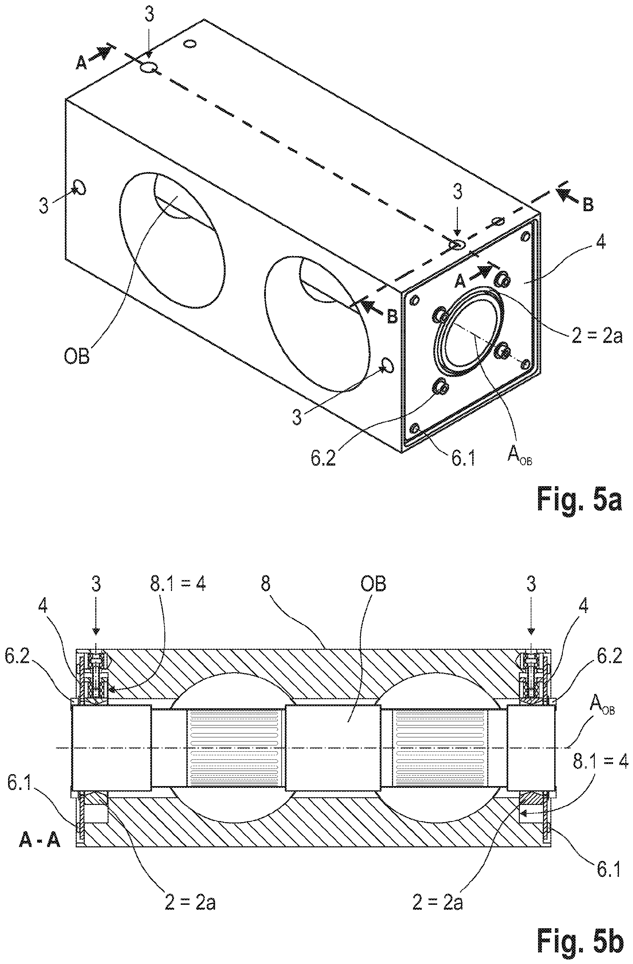

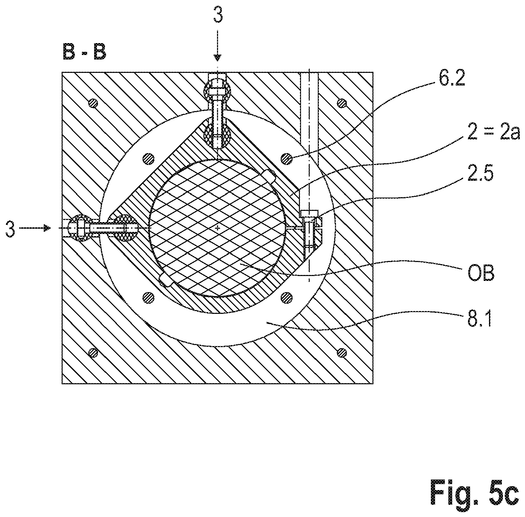

In den **Fig. 5a - 5c** ist eine weitere Vorrichtung gezeigt, die ebenfalls zwei erfindungsgemäße Justierfassungen 0 aufweist. Die Besonderheit besteht hier darin, dass die Träger 1 jeweils an einem gemeinsamen Gestell 8 ausgebildet sind, wobei sie jeweils einen anderen Bestandteil des Gestells 8 betreffen. Dabei kann der jeweilige Bestandteil einem Rahmen 1a, wie hier dargestellt, aber auch einer Platte 1b entsprechen.

Um in der Vorrichtung eine längere optische Einheit wie ein Objektiv zu fassen und zu justieren, sind die zwei Justierfassungen 0 an jeweils einem Ende des Gestells 8 ausgebildet. Vorteilhaft ist jeweils eines der zwei Abdeckelemente 4 der Justierfassungen 0 als ein am Gestell 8 ausgebildeter Bund 8.1 verkörpert. Das zweite Abdeckelement 4 ist jeweils ein biegsames Abdeckblech, das von außen über erste Verschraubungen 6.1, außerhalb des Bundes 8.1 mit dem Gestell 8 so verschraubt ist, dass es in einem spannungsfreien Zustand nicht am Träger 1 anliegt. Erst wenn diese über die zweiten Verschraubungen 6.2 fest mit jeweils dem Bund 8.1 verschraubt sind, liegt diese gespannt am Träger 1 an und dieser wird in seiner Lage fixiert.

Andere in den Zeichnungen nicht gezeigte Ausführungsbeispiele für Vorrichtungen, bei denen die Träger 1 der Justierfassungen 0 verschiedene Bestandteile eines Gestells 8 bilden, sind dafür vorgesehen, dass in den Justierfassungen 0 jeweils verschiedene optische Einheiten gefasst sind, die zueinander justierbar sind. Hierbei können zusätzlich in dem Gestell 8 auch weitere optische Einheiten fest angeordnet vorhanden sein. Das Gestell 8 weist Öffnungen und Durchbrüche auf, so dass die Verstelleinrichtungen 3 bedienbar sind und die beiden Abdeckelemente 4 mittelbar über die Hilfsfassung 2 miteinander verspannbar sind. Die Justierfassungen 0 können dabei an einer beliebigen Position innerhalb des Gestells 8 angeordnet sein, wo jeweils zur Verkörperung eines der zwei Abdeckelemente 4 ein Bund 8.1 ausgebildet ist. Das jeweils zweite Abdeckelement 4 ist wieder als ein Abdeckblech ausgeführt, welches über einen Schlitz im Gehäuse in diesem eingeführt einer Justierfassung 0 zugeordnet ist.

Eine erfindungsgemäße Justierfassung 0 hat in allen Ausführungen den Vorteil, dass sie aus einfachen Einzelteilen gefertigt ist, an die keine hohen Toleranzforderungen gestellt werden und deren Herstellung entsprechend geringe Kosten verursacht. Sie lassen sich ohne eine Gefahr der Dejustage und geforderte Feinfühligkeit langzeitstabil fixieren. Mehrere erfindungsgemäße Justierfassungen 0 lassen sich parallel und in einem festen Abstand zueinander angeordnet als eine Vorrichtung verwenden, in der eine lange optische Einheit, wie ein Objektiv, um seine optische Achse verkippt und in radialer Richtung verschoben werden kann. Sie lassen sich auch in einer Vorrichtung verwenden, in der optische Einheiten wie Linsen einzeln zueinander radial justiert werden können.

### Bezugszeichenliste

- 0: Justierfassung
- 1: Träger
- 1a: Rahmen
- 1b: Platte
- 1.1: erste Stirnfläche
- 2: Hilfsfassung
- 2a: Spannring
- 2.0: Ringachse
- 2.1: zweite Stirnfläche
- 2.2: Ringschneide
- 2.3: Ringscheibe
- 2.3.1: Fase
- 2.4: freies Ende (des Spannringes 2a)
- 2.5: Schraubverbindung (des Spannringes 2a)
- 3: Verstelleinrichtung
- 3.1: Stellschraube
- 3.1.0: Schraubenachse
- 3.1.1: Schraubenkopf
- 3.1.2: Schraubenschaft
- 3.2: erstes Zylinderelement
- 3.2.0: erste Zylinderachse
- 3.3: zweites Zylinderelement
- 3.3.0: zweite Zylinderachse
- 4: Abdeckelement
- 5: elastischer Ring
- 6.1: erste Verschraubung
- 6.2: zweite Verschraubung
- 7: Fuß
- 8: Gestell
- 8.1: Bund
- a: Abstand
- OB: Objektiv
- L: optische Linse
- A_{OB}: optische Achse des Objektivs
- d: Gesamtdicke der Justierfassung 0

## Patentansprüche

1. Justierfassung (0) zur radialen Justierung einer optischen Einheit mit einer optischen Achse, enthaltend einen Träger (1), eine Hilfsfassung (2) zur Aufnahme der optischen Einheit und wenigstens zwei den Träger (1) mit der Hilfsfassung (2) verbindende Verstelleinrichtungen (3) mit jeweils einer Stellschraube (3.1), eine Schraubenachse (3.1.0), einen Schraubenkopf (3.1.1) und einen Schraubenschaft (3.1.2) aufweisend, über deren Betätigung die Hilfsfassung (2) gegenüber dem Träger (1) in einer durch die Schraubenachsen (3.1.0) aufgespannten Justierebene verschiebbar ist, **dadurch gekennzeichnet,**
**dass** die Verstelleinrichtungen (3) jeweils ein erstes Zylinderelement (3.2) mit einer ersten Zylinderachse (3.2.0) und ein zweites Zylinderelement (3.3) mit einer zweiten Zylinderachse (3.3.0) umfassen, wobei das erste Zylinderelement (3.2) im Träger (1) und das zweite Zylinderelement (3.3) in der Hilfsfassung (2) gelagert ist, der Schraubenkopf (3.1.1) im ersten Zylinderelement (3.2) um die erste Zylinderachse (3.2.0) drehbar angeordnet ist und der Schraubenschaft (3.1.2) in der Hilfsfassung (2) schraubbar geführt ist, wobei die erste Zylinderachse (3.2.0) und die zweite Zylinderachse (3.3.0) senkrecht zu der Schraubenachse (3.1.0) ausgerichtet sind, dass der Träger (1) zwei zueinander und zu den Schraubenachsen (3.1.0) parallele erste Stirnflächen (1.1) und die Hilfsfassung (2) zwei zueinander und zu den ersten Stirnflächen (1.1) parallele zweite Stirnflächen (2.1) aufweist und
**dass** zwei Abdeckelemente (4) vorhanden sind, die jeweils an einer der zwei ersten Stirnflächen (1.1) anliegend mit dem Träger (1) fest verbunden sind und dazu geeignet sind während der radialen Justage miteinander nicht oder nur lose verbunden zu sein und dazu geeignet sind nach der radialen Justage miteinander verspannt zu sein, sodass sie die Hilfsfassung (2) zwischen sich klemmen.

2. Justierfassung (0) nach Anspruch 1, **dadurch gekennzeichnet, dass** der Träger (1) als ein Rahmen (1a) ausgebildet ist.

3. Justierfassung (0) nach Anspruch 1, **dadurch gekennzeichnet, dass** der Träger (1) als eine Platte (1b) ausgeführt ist.

4. Justierfassung (0) nach Anspruch 2 oder 3, **dadurch gekennzeichnet, dass** die Hilfsfassung (2) durch einen Spannring (2a) mit einer Ringachse (2.0) senkrecht zu den zweiten Stirnflächen (2.1) der Hilfsfassung (2) und zwei freie Enden (2.4) aufweisend gebildet ist und eine Schraubverbindung (2.5) vorhanden ist, über die die zwei freien Enden (2.4) zusammenziehbar sind.

5. Justierfassung (0) nach Anspruch 4, **dadurch gekennzeichnet,**
**dass** an einer inneren Umfangsfläche des Spannrings (2a) eine Ringschneide (2.2) mit einer gerundeten Kante ausgebildet ist.

6. Justierfassung (0) nach Anspruch 4, **dadurch gekennzeichnet,**
**dass** die beiden zweiten Stirnflächen (2.1) zueinander einen geringeren Abstand aufweisen als die beiden ersten Stirnflächen (1.1).

7. Justierfassung (0) nach Anspruch 1 oder 2, **dadurch gekennzeichnet,**
**dass** die Hilfsfassung (2) durch zwei koaxial hintereinander angeordnete Ringscheiben (2.3) und einen elastischen Ring (5) gebildet ist, wobei die Ringscheiben (2.3) einander zugewandte weitere zweite Stirnflächen (2.1) aufweisen, an denen einander zugewandte Fasen (2.3.1) ausgebildet sind, die gemeinsam eine ringförmige geteilte V-Nut bilden, und wobei der elastische Ring (5) in der V-Nut liegt, und wenigstens zwei erste Verschraubungen (6.1) vorhanden sind, mittels derer die Ringscheiben (2.3), einer Rückstellkraft des elastischen Ringes (5) entgegenwirkend, zueinander fixiert sind.

8. Justierfassung (0) nach Anspruch 7, **dadurch gekennzeichnet,**
**dass** wenigstens zwei zweite Verschraubungen (6.2) vorhanden sind, die dazu geeignet sind, die während der radialen Justage nicht oder nur lose miteinander verbundenen und nach der radialen Justage miteinander verspannten Abdeckelemente (4) miteinander zu verbinden.

9. Justiervorrichtung mit zwei Justierfassungen (0), **dadurch gekennzeichnet, dass** eine der zwei Justierfassungen (0) nach einem der vorgenannten Ansprüche ausgeführt ist und die eine andere der zwei Justierfassungen (0) nach Anspruch 5 oder 7 ausgeführt ist, wobei die zwei Justierfassungen (0) parallel zueinander ausgerichtet und in einem Abstand (a) zueinander angeordnet sind.

10. Justiervorrichtung mit mindestens zwei Justierfassungen (0) nach einem der Ansprüche 1 bis 8, **dadurch gekennzeichnet,**
**dass** ein Gestell (8) vorhanden ist und die Träger (1) der mindestens zwei Justierfassungen (0) Bestandteile des Gestells (8) sind.

11. Justiervorrichtung nach Anspruch 10, **dadurch gekennzeichnet,**
**dass** das Abdeckelement (4) wenigstens einer der Justierfassungen (0) durch einen an dem gemeinsamen Gestell (8) ausgebildeten Bund (8.1) gebildet ist.

## Claims

1. An adjustment mount (0) for radial adjustment of an optical unit having an optical axis, said mount (0) containing a support (1), an auxiliary mount (2) for receiving the optical unit and at least two adjusting means (3) connecting the support (1) to the auxiliary mount (2), each with an adjusting screw (3.1), comprising a screw axis (3.1.0), a screw head (3.1.1) and a screw shank (3.1.2), by means of the actuation of which the auxiliary mount (2) can be displaced relative to the support (1) in an adjustment plane defined by the screw axes (3.1.0), **characterized in that** the adjusting means (3) each comprise a first cylinder element (3.2) with a first cylinder axis (3.2.0) and a second cylinder element (3.3) with a second cylinder axis (3.3.0), wherein the first cylinder element (3.2) is mounted in the support (1) and the second cylinder element (3. 3) is mounted in the auxiliary mount (2), the screw head (3.1.1) is arranged in the first cylinder element (3.2) so as to be rotatable about the first cylinder axis (3.2.0) and the screw shank (3.1.2) is guided in the auxiliary mount (2) so as to be screwable, the first cylinder axis (3.2.0) and the second cylinder axis (3.3.0) being aligned perpendicular to the screw axis (3.1. 0),
**in that** the support (1) has two first end faces (1.1) parallel to one another and to the screw axes (3.1.0) and the auxiliary mount (2) has two second end faces (2.1) parallel to one another and to the first end faces (1.1), and
**in that** two cover elements (4) are present, each of which are firmly connected to the support (1) while contacting a respective one of the two first end faces (1.1) and are suitable for not being connected to one another or only being loosely connected to one another during the radial adjustment and for being braced together after the radial adjustment, so that they clamp the auxiliary mount (2) between them.

2. The adjustment mount (0) according to claim 1, **characterized in that** the support (1) is configured as a frame (1a).

3. The adjustment mount (0) according to claim 1, **characterized in that** the support (1) is provided as a plate (1b).

4. The adjustment mount (0) according to claim 2 or 3, **characterized in that** the auxiliary mount (2) is formed by a clamping ring (2a) with an annular axis (2.0) perpendicular to the second end faces (2.1) of the auxiliary mount (2) and having two free ends (2.4), and a screw connection (2.5) is provided by means of which the two free ends (2.4) can be drawn together.

5. The adjustment mount (0) according to claim 4, **characterized in that**
an annular blade (2.2) with a rounded edge is formed on an inner circumferential surface of the clamping ring (2a).

6. The adjustment mount (0) according to claim 4, **characterized in that**
the two second end faces (2.1) are at a smaller distance from each other than the two first end faces (1.1).

7. The adjustment mount (0) according to claim 1 or 2, **characterized in that**
the auxiliary mount (2) is formed by two annular disks (2.3) arranged coaxially one behind the other and an elastic ring (5), the annular disks (2.3) having further second end faces (2.1) which face one another and on which mutually facing chamfers (2.3.1) are formed, which together form an annular divided V-groove, and wherein the elastic ring (5) lies in the V-groove, and at least two first screw connections (6.1) are present, by means of which the annular disks (2.3) are fixed relative to one another, counteracting a restoring force of the elastic ring (5).

8. The adjustment mount (0) according to claim 7, **characterized in that**
at least two second screw connections (6.2) are provided, which are suitable for connecting the cover elements (4), which are not or only loosely connected to each other during radial adjustment and are braced together after radial adjustment.

9. An adjustment device comprising two adjustment mounts (0), **characterized in that** one of the two adjustment mounts (0) is provided according to any one of the aforementioned claims and the other of the two adjustment mounts (0) is provided according to claim 5 or 7, the two adjustment mounts (0) being aligned parallel to one another and arranged at a distance (a) from one another.

10. An adjustment device comprising at least two adjustment mounts (0) according to any one of claims 1 to 8, **characterized in that**
a base frame (8) is present and the supports (1) of the at least two adjustment mounts (0) are components of the base frame (8).

11. The adjustment device according to claim 10, **characterized in that**
the cover element (4) of at least one of the adjustment mounts (0) is formed by a collar (8.1) formed on the common base frame (8).

## Revendications

1. Monture d'ajustage (0) conçue pour réaliser l'ajustage radial d'une unité optique présentant un axe optique, comprenant un support (1), une monture auxiliaire (2) pour recevoir l'unité optique et au moins deux dispositifs de réglage (3) reliant le support (1) à la monture auxiliaire (2) et présentant chacun une vis de réglage (3. 1), dont chacune présente un axe de vis (3.1.0), une tête de vis (3.1.1) et une tige de vis (3.1.2), par l'actionnement desquelles la monture auxiliaire (2) peut être déplacée par rapport au support (1) dans un plan d'ajustage défini par les axes de vis (3.1.0), **caractérisée**
**en ce que** les dispositifs de réglage (3) comprennent chacun un premier élément de cylindre (3.2) avec un premier axe de cylindre (3.2.0) et un deuxième élément de cylindre (3.3) avec un deuxième axe de cylindre (3.3.0), le premier élément de cylindre (3.2) étant monté dans le support (1) et le deuxième élément de cylindre (3.3) étant monté dans la monture auxiliaire (2), la tête de vis (3.1.1) est disposée dans le premier élément de cylindre (3.2) de manière à pouvoir tourner autour du premier axe de cylindre (3.2.0) et la tige de vis (3.1.2) étant guidée de manière à pouvoir être vissée dans la monture auxiliaire (2), le premier axe de cylindre (3.2.0) et le deuxième axe de cylindre (3.3.0) étant perpendiculaires à l'axe de vis (3.1. 0),
**en ce que** le support (1) présente deux premières surfaces frontales (1.1) parallèles l'une à l'autre et aux axes de vis (3.1.0) et la monture auxiliaire (2) présente deux deuxièmes surfaces frontales (2.1) parallèles l'une à l'autre et aux premières surfaces frontales (1.1), et
**en ce qu'**il existe deux éléments de recouvrement (4) qui sont reliés de manière fixe au support (1), respectivement en contact avec l'une des deux premières surfaces frontales (1.1), et sont aptes à ne pas être reliés entre eux ou à être reliés de manière lâche pendant l'ajustage radial et à être serrés entre eux après l'ajustage radial, de sorte qu'ils serrent entre eux la monture auxiliaire (2).

2. Monture d'ajustage (0) selon la revendication 1, **caractérisée en ce que** le support (1) est conçu comme un cadre (1a).

3. Monture d'ajustage (0) selon la revendication 1, **caractérisée en ce que** le support (1) est réalisé sous la forme d'une plaque (1b).

4. Monture d'ajustage (0) selon la revendication 2 ou 3, **caractérisée**
**en ce que** la monture auxiliaire (2) est formée par une bague de serrage (2a) avec un axe d'anneau (2.0) perpendiculaire aux deuxièmes surfaces frontales (2.1) de la monture auxiliaire (2) et présentant deux extrémités libres (2.4) et qu'il existe une liaison par vis (2.5) par laquelle les deux extrémités libres (2.4) peuvent être rapprochées.

5. Monture d'ajustage (0) selon la revendication 4, **caractérisée**
**en ce qu'**une lame annulaire (2.2) avec une arête arrondie est formée sur une surface périphérique intérieure de la bague de serrage (2a).

6. Monture d'ajustage (0) selon la revendication 4, **caractérisée**
**en ce que** les deux deuxièmes surfaces frontales (2.1) présentent entre elles une distance inférieure à celle des deux premières surfaces frontales (1.1).

7. Monture d'ajustage (0) selon la revendication 1 ou 2, **caractérisée**
**en ce que** la monture auxiliaire (2) est formée par deux disques annulaires (2.3) disposés coaxialement l'un derrière l'autre et par une bague élastique (5), les disques annulaires (2.3) présentant d'autres deuxièmes surfaces frontales (2.1) tournées l'une vers l'autre, sur lesquelles des chanfreins (2.3) qui forment ensemble une rainure annulaire en V divisée, et la bague élastique (5) étant située dans la rainure en V, et au moins deux premiers vissages (6.1) étant présents, au moyen desquels les disques annulaires (2.3) sont fixés l'un par rapport à l'autre en s'opposant à une force de rappel de la bague élastique (5).

8. Monture d'ajustage (0) selon la revendication 7, **caractérisée**
**en ce qu'**il existe au moins deux deuxièmes vissages (6.2) aptes à relier entre eux les éléments de recouvrement (4) qui ne sont pas reliés entre eux ou seulement de manière lâche pendant l'ajustage radial et qui sont serrés entre eux après l'ajustage radial.

9. Dispositif d'ajustage comprenant deux montures d'ajustage (0), **caractérisé**
**en ce que** l'une des deux montures d'ajustage (0) est réalisée selon l'une quelconque des revendications précitées et l'autre des deux montures d'ajustage (0) est réalisée selon la revendication 5 ou 7, les deux montures d'ajustage (0) étant orientées parallèlement l'une à l'autre et disposées à une distance (a) l'une de l'autre.

10. Dispositif d'ajustage comprenant au moins deux montures d'ajustage (0) selon l'une quelconque des revendications 1 à 8, **caractérisé**
**en ce qu'**un bâti (8) est présent et que les supports (1) des au moins deux montures d'ajustement (0) sont des éléments constitutifs du bâti (8).

11. Dispositif d'ajustement selon la revendication 10, **caractérisé**
**en ce que** l'élément de recouvrement (4) d'au moins l'une des montures d'ajustage (0) est formé par un épaulement (8.1) réalisé sur le bâti commun (8).
